# EUROPÄISCHE PATENTSCHRIFT

(11) **EP 0 832 372 B1**
(45) Veröffentlichungstag und Bekanntmachung des Hinweises auf die Patenterteilung: **19.04.2000**
(21) Anmeldenummer: 96920795.0
(22) Anmeldetag: 05.06.1996
(51) Int. Cl.: F16D 65/56

(54) **SCHEIBENBREMSE MIT AUTOMATISCHER NACHSTELLVORRICHTUNG**
DISC BRAKE WITH AUTOMATIC ADJUSTING DEVICE
FREIN A DISQUE A DISPOSITIF AUTOMATIQUE DE RATTRAPAGE DE JEU

(30) Priorität: 14.06.1995 DE 19521634
(43) Veröffentlichungstag der Anmeldung: 01.04.1998
(73) Patentinhaber: Continental Teves AG & Co. oHG, 60488 Frankfurt (DE)
(72) Erfinder: BAUER, Jürgen, D-65187 Wiesbaden (DE); KEFERSTEIN, Hans-Georg, D-64289 Darmstadt (DE); DÖLL, Andreas, D-60439 Frankfurt am Main (DE); THIEL, Rudolf, D-60488 Frankfurt am Main (DE)
(86) Internationale Anmeldenummer: EP9602446
(87) Internationale Veröffentlichungsnummer: WO9700387

(56) Entgegenhaltungen:
- EP-A- 0 249 522
- DE-A- 3 631 035
- FR-A- 2 638 214
- GB-A- 2 063 398

## Beschreibung

Die Erfindung betrifft eine Scheibenbremse mit automatischer Nachstellvorrichtung gemäß dem Oberbegriff des Patentanspruchs 1.

Eine derartige Nachstellvorrichtung ist aus der EP 0 403 635 B1 bekannt. Bei der bekannten Anordnung ist eine auf einer Spindel aufgeschraubte Mutter zusammen mit einem eine konische Reibfläche aufweisenden Kupplungselement und einem in einer Bohrung des Bremskolbens verschiebbar angeordneten Hilfskolben als Kombinationsbauteil einstückig ausgebildet. Eine derartige Anordnung erfordert genaue Koaxialität von Spindel, Kombinationsbauteil und Bohrung des Bremskolbens. Dies wiederum bedingt genaueste Fertigungstoleranzen mit den damit verbundenen erhöhten Fertigungskosten. Darüberhinaus ist es unbedingt erforderlich, daß der als Hilfskolben dienende Abschnitt des Kombinationsbauteils zusammen mit der Mutter drehbar ist. Andererseits ist eine hydraulische Dichtung des Hilfskolbens erforderlich, die im Falle der bekannten Anordnung leicht drehbar sein muß. Auch eine solche Maßnahme wirkt sich nachteilig auf die Fertigungskosten aus.

Darüber hinaus wird in der EP 0 249 522 A1 eine automatische Nachstellvorrichtung offenbart, bei der in ähnlicher Weise der Hilfskolben und die Nachstellmutter allerdings als getrennte Bauteile ausgeführt sind. Dabei besitzt der Hilfskolben eine axiale Verlängerung, die über eine Befestigungsscheibe an der auf der Nachstellspindel befindlichen Mutter axial fixiert ist. Der Hilfskolben seinerseits durchragt innerhalb einer Bohrung den Boden des Bremskolbens und ist auf der der Bremsscheibe zugekehrten Seite lediglich durch eine Kappe abgedeckt, die zu Montagezwecken entfernt werden kann. Damit ist der Hilfskolben bei der Montage (z. B. Bremsbelagwechsel) zuganglich und gestattet durch axiales zurückdrücken ein öffnen der Reibkupplung, wodurch sich der gesamte Bremskolben leichtgängig axial verschieben läßt. Die beschriebene Nachstellvorrichtung trifft hingegen keine Maßnahmen zur Verhinderung einer übermäßigen Nachstellung im Falle hohen Betätigungsdruckes und ist zudem hinsichtlich der Verbindung von Hilfskolben und Nachstellmutter unnötig kompliziert aufgebaut.

Aufgabe der Erfindung ist es, eine bekannte Scheibenbremse mit automatischer Nachstellvorrichtung zu verbessern, so daß größere Fertigungstoleranzen und geringere Fertigungskosten möglich sind.

Die Lösung der Aufgabe ergibt sich aus dem kennzeichnenden Teil des Patentanspruchs 1. Im Prinzip besteht die Lösung darin, den Hilfskolben und das Kupplungselement an zwei getrennt herzustellenden Bauteilen auszubilden und die Bauteile lösbar miteinander zu verbinden. Im Bereich der Verbindung ist der Ausgleich von Koaxialitäten durch ein vorzugebendes Spiel zwischen beiden Bauteilen möglich. Eine Schnappverbindung gemäß einer vorteilhaften Varainte erlaubt eine Dichtungsanordnung des Hilfskolbens, die nicht leicht drehbar zu sein braucht, da an der Schnappverbindung die Mutter gegenüber dem Hilfskolben drehbar angeordnet sein kann. Bei Bedarf können sogar verschiedene Materialien für die Mutter und den Hilfskolben verwendet werden.

In einer bevorzugten Ausführungsform ist das Kupplungselement einstückig mit der Mutter ausgebildet. Hierdurch wird eine einfache Herstellung des Gewindes der Mutter und der konischen Reibfläche des kupplungselements gewährleistet.

Der Hilfskolben kann in diesem Fall eine besonders einfache Gestalt aufweisen.

In einer ersten vorteilhaften Ausgestaltung der Schnappverbindung ist der Hilfskolben in einer Bohrung der Mutter aufgenommen und weist eine außen umlaufende Ringnut auf, die mit einer innen umlaufenden Ringnut der Bohrung der Mutter fluchtet. In die Ringnuten ist ein offener Metallring als Verbindungselement eingelegt, der elastisch einschnappt.

Der Metallring kann aus einem Drahtstück gebogen sein und einen kreisrunden Querschnitt aufweisen oder im Schnitt rechteckig ausgestaltet sein.

In einer Weiterbildung der Erfindung ist die Schnappverbindung ausrastbar, wenn beispielsweise durch hohen hydraulischen Druck der Hilfskolben in die eine Axialrichtung gedrückt und andererseits die Mutter in entgegengesetzter Axialrichtung zurückgehalten wird. Eine solche Situation kann auftreten, wenn die Mutter durch eine Störung nicht mehr drehbar ist oder bei solchen Nachstellvorrichtungen, die ein Drehen der Mutter erst nach der hydraulischen Betätigung erlauben. Wenn in solchen Situationen ein besonders langer Betätigungsweg des Bremskolbens hinzu kommt, so könnte ein axial festgehaltener Hilfskolben aus seiner Bohrung im Bremskolben gleiten und ein vollkommenes Versagen der hydraulischen Betätigungsvorrichtungen verursachen. Ist hingegen die Schnappverbindung ausrastbar, so bleibt der Hilfskolben stets in seiner Bohrung im Bremskolben und eine oben beschriebene Störung wird lediglich zu einem Ausrasten der Schnappverbindung führen, ohne daß eine hydraulische Undichtigkeit auftritt.

Das Ausrasten der Schnappverbindung kann auf einfache Weise dadurch ermöglicht sein, daß zumindest eine Ringnut eine rampenartig abgeschrägte Nutwand aufweist, an der entlang der Metallring bei axialer Belastung auch radial herausrutscht.

Zum Einfüllen von Hydraulikflüssigkeit in den Bremszylinder muß die darin befindliche Luft entweichen. Dies geschieht normalerweise durch Absaugen der Luft vor dem Einfüllen der Flüssigkeit ("Vakuum - Entlüften"). Dabei gibt es Probleme mit Nischen im Inneren des Bremszylinders, die vom Innenraum weitgehend abgeschnitten sind. Beispielsweise bildet die auf der Spindel aufgeschraubte Mutter zusammen mit dem Hilfskolben einen abgeschlossenen Hohlraum, aus dem die Luft nur über Spalte mit kleinem Strömungsquerschnitt entweichen kann. In einer Weiterbildung der Erfindung ist daher die Mutter mit einem radialen Entlüftungskanal versehen, durch den die Luft aus dem gebildeten Hohlraum schneller entweichen kann. Eine weitere Variante sieht vor, daß der Hilfskolben eine Entlüftungsnut aufweist, die ausgehend vom eingeschlossenen Hohlraum zunächst radial über die ringförmige Kolbenstirnfläche verläuft und dann in achsparalleler Richtung auf der äußeren Mantelfläche des Hilfskolbens bis in einen Bereich ragt, der von der Mutter nicht mehr überdeckt wird.

Ausführungsbeispiele der Erfindung werden nachfolgend anhand der Zeichnungen näher erläutert.

Es zeigen:

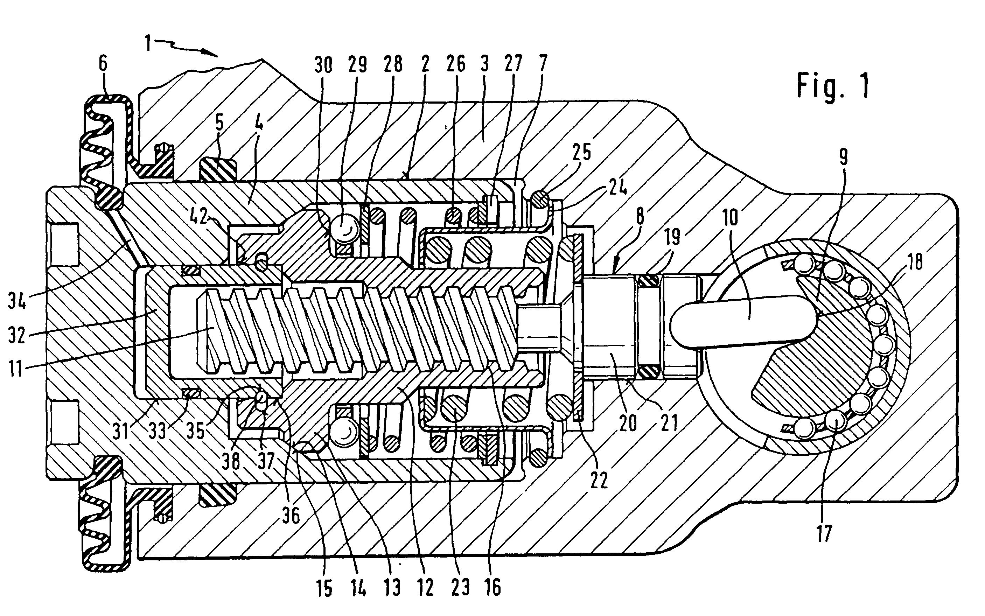

- Fig.1: ein erstes Ausführungsbeispiel einer automatischen Nachstellvorrichtung einer erfindungsgemäßen Scheibenbremse im Schnitt,
- Fig. 2: eine Teilansicht, ähnlich Fig. 1 einer automatischen Nachstellvorrichtung, in einer zweiten Ausführungsform,
- Fig. 3 und 4: jeweils eine geschnittene Teilansicht von Weiterbildungen der Erfindung.

In den Figuren erkennt man einen Teil eines Bremsengehäuses 1 einer Scheibenbremse mit einer automatischen Nachstellvorrichtung, die im Inneren einer Zylinderbohrung 2 eines Bremszylinders 3 angeordnet ist. Der Bremszylinder 3 gehört zu einer hydraulischen Betätigungsvorrichtung, die einen im Bremszylinder 3 axial verschiebbaren Bremskolben 4 aufweist. Der Bremskolben 4 ist mittels eines elastischen Dichtrings 5 gegenüber der Zylinderbohrung 2 abgedichtet und mittels einer elastischen Faltmanschette 6 vor Verschmutzung geschützt. Der Innenraum 7 des Bremszylinders 3 ist mit Hydraulikflüssigkeit gefüllt.

Für die hydraulische Betätigung des Bremszylinders 3 wird die Hydraulikflüssigkeit im Innenraum 7 mit Druck beaufschlagt. Der hydraulische Druck drückt den Bremskolben 4 in der Zeichnung nach links aus dem Bremszylinder 3 heraus, um nicht gezeigte Bremsbeläge an eine nicht gezeigte Bremsscheibe anzudrücken.

Das Bremsengehäuse 1 ist auch mit einer mechanischen Betätigungsvorrichtung 8 ausgestattet, die im wesentlichen eine drehbar gelagerte Betätigungswelle 9, ein Druckstück 10, eine axial verschiebbare und drehfest gelagerte Spindel 11 und eine auf die Spindel 11 aufgeschraubte Mutter 12 aufweist. Die Mutter 12 ist einstückig mit einem Kupplungselement 13 ausgebildet, das mit einer konischen Reibfläche 14 versehen ist. Im Inneren des hohlen Bremskolbens 4 ist eine komplementär ausgebildete Reibfläche 15 vorgesehen, an die die konische Reibfläche 14 andrückbar ist. Die Spindel 11 und die Mutter 12 sind durch ein selbsthemmungsfreies Gewinde 16 miteinander verbunden.

Zur Betätigung der mechanischen Betätigungsvorrichtung 8 wird die in einem Rollenlager 17 reibungsfrei gelagerte Betätigungswelle 9 entgegen dem Uhrzeigersinn gedreht. Dabei wird das in einer exzentrischen Ausnehmung 18 angeordnete Druckstück 10 nach links bewegt und diese Bewegung auf die Spindel 11 übertragen. Die Spindel 11 besitzt einen Führungsabschnitt 20, der in einer Führungsbohrung 21 des Bremsengehäuses 1 verschiebbar geführt und mittels eines Dichtrings 19 hydraulisch abgedichtet ist. Weiterhin ist die Spindel 11 mit einem Teller 22 versehen, der als Anlage für das eine Ende einer Drahtfeder 23 dient, die ihrerseits mit dem anderen Ende an einem Blechtopf 24 anliegt, der seinerseits mittels eines Metallrings 25 im Bremsengehäuse 1 fixiert ist. Die Drahtfeder 23 übt über den Teller 22 auf die Spindel 11 eine Axialkraft nach rechts entgegen der Betätigungsrichtung aus. Die in Betätigungsrichtung nach links gedrückte Spindel 11 nimmt die Mutter 12 mit und drückt die Reibfläche 14 des Kupplungselements 13 gegen die Reibfläche 15 des Bremskolbens 4, so daß die Mutter 12 undrehbar am Bremskolben 4 festgehalten und abgestützt ist. Die Axialkraft in Betätigungsrichtung wird daher voll auf den Bremskolben 4 übertragen, der sich daraufhin axial nach links bewegt, um die nicht gezeigten Bremsbeläge an die nicht gezeigte Bremsscheibe anzudrücken.

Zur Beendigung der mechanischen Betätigung wird die Betätigungswelle 9 im Uhrzeigersinn zurückgedreht, woraufhin die Drahtfeder 23 über den Teller 22 die Spindel 11 in Axialrichtung nach rechts zurückbewegt.

Im Inneren des Bremskolbens 4 ist eine zweite Drahtfeder 26 angeordnet, die mit einem Ende gegen einen am Bremskolben 4 unverschiebbar fixierten Sprengring 27 und mit ihrem anderen Ende gegen einen beweglichen Scheibenring 28 andrückt. Der axial bewegliche, nicht drehbare Scheibenring 28 drückt über ein Kugellager 29 axial gegen eine Lagerfläche 30 der drehbaren Mutter 12, wodurch diese nach links mit der Reibfläche 14 an die Reibfläche 15 des Bremskolbens 4 gedrückt wird. Dadurch bleibt die zwischen den Reibflächen 14 und 15 gebildete Reibkupplung im unbetätigten Zustand der Scheibenbremse stets geschlossen.

Im Falle einer hydraulischen Betätigung bewegt sich der Bremskolben 4 nach links. Wenn aufgrund fortgeschrittenen Verschleißes der Bremsbeläge diese Bewegung des Bremskolbens 4 einen geringfügigen, durch das Axialspiel des selbsthemmungsfreien Gewindes 16 bestimmtes Maß überschreitet, so wird die Mutter 12 von der in Ruhestellung befindlichen Spindel 11 an einer weiteren Axialbewegung gehindert. Eine weitere Axialbewegung des Bremskolbens 4 führt zu einem Öffnen der Reibkupplung zwischen den Reibflächen 14 und 15. Dadurch wird die Mutter 12 drehbar gegenüber der Spindel 11. Aufgrund der von der Drahtfeder 26 über das Kugellager 29 auf die Mutter 12 ausgeübten Axialkraft dreht sich die Mutter 12 über das selbsthemmungsfreie Gewinde 16 auf der Spindel 11, bis die dadurch bedingte Axialbewegung der Mutter 12 nach links ausreicht, um die Reibflächen 14,15 wieder in Eingriff miteinander zu bringen und dadurch die Drehung der Mutter 12 zu beenden. Selbstverständlich darf die von der Feder 26 erzeugte Axialkraft nach links nicht größer sein als die von der Feder 23 erzeugte Axialkraft nach rechts.

In einer Bohrung 31 des Bremskolbens 4 ist ein Hilfskolben 32 verschiebbar angeordnet und mittels eines Dichtrings 33 hydraulisch abgedichtet. Der Hilfskolben 32 ist auf seiner rechten Axialseite dem hydraulischen Druck und auf seiner linken Axialseite dem Atmosphärendruck ausgesetzt, wofür ein kleiner Kanal 34 sorgt, der vom Boden der Bohrung 31 ausgehend den Innenraum mit den Außenraum verbindet. Der Hilfskolben 32 ist durch eine axial einrastbare Schnappverbindung mit der Mutter 12 verbunden. Die Schnappverbindung besteht aus einer am Hilfskolben 32 ausgebildeten, außen umlaufenden Ringnut 35, einer in einer Bohrung 36 der Mutter 12 innen umlaufenden Ringnut 37 und einem offenen Metallring 38, der in die fluchtend zueinander angeordneten Ringnuten 35 und 37 eingerastet ist. Der Metallring 38 ist aus einem Drahtstück gebogen und weist einen runden Querschnitt auf.

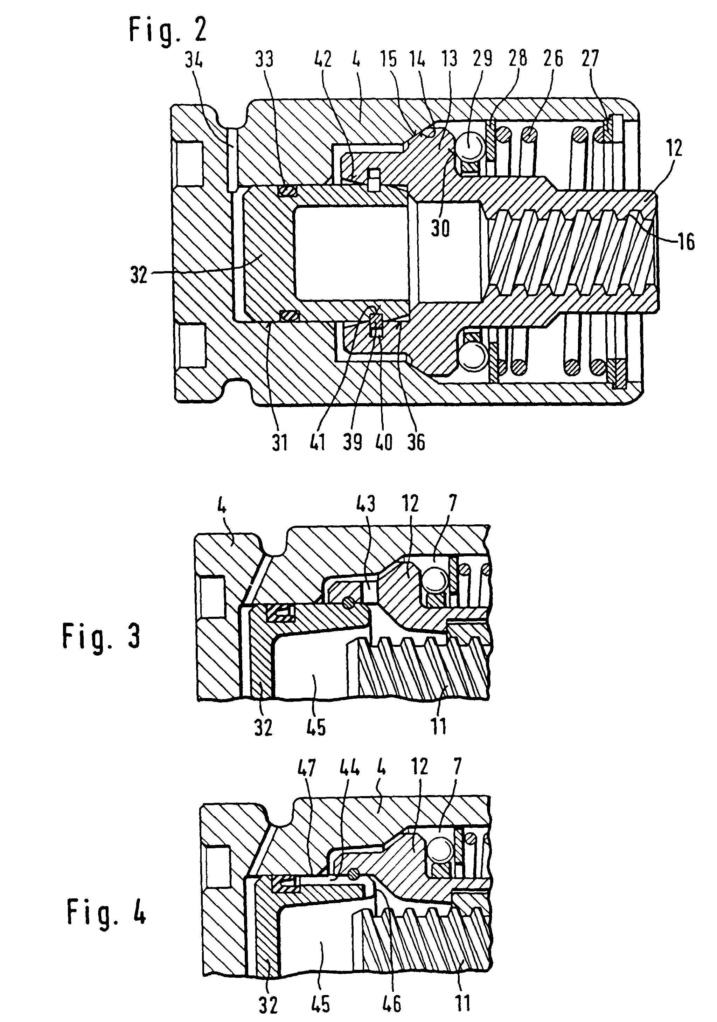

Bei der in Fig. 2 gezeigten modifizierten Ausführungsform ist der Metallring 39 im Schnitt rechteckig ausgestaltet. Er ist in einer entsprechend modifizierten Ringnut 40 der Mutter 12 und einer modifizierten Ringnut 41 des Hilfskolbens 32 eingeschnappt. Um ein Einschnappen des jeweiligen Metallrings 38,39 zu erleichtern, ist die Mutter 12 an der Mündung ihrer Bohrung 36 mit einer Fase 42 versehen.

Die Funktion des Hilfskolbens 32 besteht darin, bei hohem hydraulischen Druck eine Axialbewegung nach links gegenüber dem Bremskolben 4 auszuführen. Aufgrund der Schnappverbindung versucht der Hilfskolben 32 die Mutter 12 axial nach links mitzunehmen. Dies führt zu einem Schließen der Reibkupplung durch Anlage der Reibfläche 14 an der Reibfläche 15. Die nunmehr undrehbar gewordene Mutter 12 versucht bei einer weiteren Axialbewegung des Bremskolbens 4 nach links auch die Spindel 11 in dieselbe Axialrichtung mitzunehmen. Dies gelingt nicht, solange die durch den hydraulischen Druck am Hilfskolben 32 erzeugte Axialkraft nach links kleiner ist als die durch die Drahtfeder 23 und den hydraulischen Druck auf die Spindel 11 wirkende Axialkraft nach rechts. Wenn aber der hydraulische Druck einen vorbestimmten Wert übersteigt, so wird die Kraft des Hilfskolbens 32 größer als die Gegenkraft der Drahtfeder 23 und die hydraulische Gegenkraft und die Spindel 11 bewegt sich zusammen mit der Mutter 12 und dem Bremskolben 4 nach links. In diesem Fall erfolgt keine Nachstellung der Nachstellvorrichtung durch Drehung der Mutter 12 auf der Spindel 11.

Die beschriebene Verhinderung der Nachstellung bei hohem hydraulischen Druck hat ihren Sinn darin, daß ein hoher hydraulischer Druck extrem große Zuspannkräfte erzeugt. Das Bremsengehäuse 1 besitzt aber eine gewisse Elastizität und biegt sich daher bei sehr großen Zuspannkräften etwas auf. Wenn nun der durch die Aufbiegung des Bremsengehäuses 1 bedingte längere Betätigungsweg des Bremskolbens 4 durch ein Nachstellen der Nachstellvorrichtung ausgeglichen würde, so käme es nach Beendigung der hydraulischen Betätigung zu einem Blockieren der Scheibenbremse, da das Bremsengehäuse 1 sich elastisch zurückverformt, ohne daß der Bremskolben 4 eine entsprechende Rückbewegung ausführen könnte.

Eine in Fig. 3 gezeigte Ausführungsform sieht vor, daß die Mutter 12 mit einem Entlüftungskanal 43 versehen ist, der eine Verbindung zwischen einem von der Mutter 12, der Spindel 11 und dem Hilfskolben 32 gebildeten Hohlraum 45 und dem Innenraum 7 des Bremszylinders 3 herstellt.

Bei der in Fig. 4 gezeigten Variante ist der Hilfskolben 32 mit einer Entlüftungsnut 44 versehen, die vom Hohlraum 45 ausgehend radial entlang der Kolbenstirnfläche 46 verläuft, um dann in achsparallele Richtung abbiegend auf der Mantelfläche 47 des Hilfskolbens 32 bis in einen Bereich verläuft, der von der Mutter 12 nicht mehr überdeckt ist.

## Patentansprüche

1. Scheibenbremse mit automatischer Nachstellvorrichtung; mit einer hydraulischen Betätigungsvorrichtung, die einen in einem Bremszylinder (3) verschiebbar angeordneten Bremskolben (4) aufweist; mit einer mechanischen Betätigungsvorrichtung (8), die zur Übertragung einer achsparallelen Betätigungskraft auf den Bremskolben (4) eine axial verschiebbare, drehfeste Spindel (11) und eine auf die Spindel (11) aufgeschraubte Mutter (12) aufweist; mit einem Kupplungselement (13) das mit der Mutter (12) in drehfester Verbindung ist und eine konische Reibfläche (14) aufweist, die bei mechanischer Betätigung der Scheibenbremse an einer am Bremskolben (4) ausgebildete Reibfläche (15) anpreßbar ist, um ein Drehen der Mutter (12) zu verhindern; mit Mitteln (23) zum axial-federnden Zurückhalten des Kupplungselements (13) bei hydraulischer Betätigung der Bremse, so daß der axial bewegte Bremskolben (4) außer Eingriff mit dem Kupplungselement (13) kommt und ein Drehen der Mutter (12) auf der Spindel (11) zum Nachstellen der Nachstellvorrichtung ermöglicht, solange der hydraulische Druck einen vorbestimmten Wert nicht übersteigt; mit einem in einer axialen Bohrung (31) des Bremskolbens (4) verschiebbar angeordneten, mit der Mutter (12) verbundenen Hilfskolben (32), der auf der einen Axialseite dem hydraulischen Druck und auf der anderen Seite dem Atmosphärendruck ausgesetzt ist, so daß bei einem hydraulischen Druck, der den durch die federnde Rückhaltekraft bestimmten Wert übersteigt, das Kupplungselement (13) mit seiner Reibfläche (14) wiederum an die Reibfläche (15) des Bremskolbens (4) angedrückt wird, wobei der Hilfskolben (32) und das Kupplungselement (13) an zwei getrennten Bauteilen (32,12) ausgebildet sind und der Hilfskolben (32) durch eine axial einrastbare Schnappverbindung (35, 37, 38, 39, 40, 41) mit der Mutter (12) verbunden ist, **dadurch gekennzeichnet**, daß der Hilfskolben (32) in einer Bohrung (36) der Mutter (12) aufgenommen ist und eine außen umlaufende Ringnut (35,41) aufweist, die mit einer innen umlaufenden Ringnut (37, 40) der Bohrung (36), der Mutter (12) fluchtet, und daß in den Ringnuten (35,37,40,41) ein offener Metallring (38,39) als Verbindungselement angeordnet ist.

2. Scheibenbremse nach Anspruch 1, **dadurch gekennzeichnet**, daß das Kupplungselement (13) einstückig mit der Mutter (12) ausgebildet ist.

3. Scheibenbremse nach Anspruch 1, **dadurch gekennzeichnet**, daß der Metallring (38) aus einem Drahtstück gebogen ist.

4. Scheibenbremse nach Anspruch 1, **dadurch gekennzeichnet**, daß der Metallring (39) im Schnitt rechteckig ausgestaltet ist.

5. Scheibenbremse nach einem der vorhergehenden Ansprüche, **dadurch gekennzeichnet**, daß die Schnappverbindung ausrastbar ist.

6. Scheibenbremse nach Anspruch 1, **dadurch gekennzeichnet**, daß zumindest eine Ringnut eine rampenartig abgeschrägte Nutwand aufweist.

7. Scheibenbremse nach einem der Ansprüche 1 bis 6, **dadurch gekennzeichnet**, daß die Mutter (12) einen im wesentlichen radialen Entlüftungskanal (43) aufweist.

8. Scheibenbremse nach einem der Ansprüche 1 bis 6, **dadurch gekennzeichnet**, daß der Hilfskolben (32) zumindest eine Entlüftungsnut (44) aufweist, die von einem eingeschlossenen Hohlraum (45) ausgehend zunächst radial entlang einer ringförmigen Kolbenstirnfläche (46) und dann achsparallel auf der äußeren Mantelfläche (47) des Hilfskolbens (32) verläuft und bis in einen Bereich ragt, der von der Mutter (12) nicht überdeckt wird.

## Claims

1. Disc brake with an automatic adjusting device; including a hydraulic actuating device having a brake piston (4) that is slidable in a brake cylinder (3); a mechanic actuating device (8) having an axially slidable, unrotatable spindle (11) for transmitting a paraxial actuating force to the brake piston (4) and a nut (12) screwed to the spindle (11); a coupling element (13) which is unrotatably connected to the nut (12) and has a conical friction surface (14) which, on mechanic actuation of the disc brake, is adapted to be urged against a friction surface (15) provided on the brake piston (4) to prevent rotation of the nut (12); means (23) for axially resiliently retaining the coupling element (13) upon hydraulic acuation of the brake so that the axially moved brake piston (4) is disengaged from the coupling element (13) and permits rotation of the nut (12) on the spindle (11) for readjustment of the adjusting device as long as the hydraulic pressure does not exceed a predetermined value; an auxiliary piston (32) slidable in an axial bore (31) of the brake piston (4) and connected to the nut (12), which auxiliary piston (32) is exposed to hydraulic pressure on the one axial side and to atmospheric pressure on the other side so that the coupling element (13) with its friction surface (14) is again urged against the friction surface (15) of the brake piston (4) when hydraulic pressure prevails which exceeds the value determined by the resilient retaining force, wherein the auxiliary piston (32) and the coupling element (13) are provided on two separate component parts (32, 12), and the auxiliary piston (32) is connected to the nut (12) by an axially lockable snap-in connection (35, 37, 38, 39, 40, 41),
**characterized** in that the auxiliary piston (32) is accommodated in a bore (36) of the nut (12) and has on its outside a circumferential annular groove (35, 41) which is in alignment with an internal circumferential annular groove (37, 40) in the bore (36) of the nut (12), and in that an open metal ring (38, 39) is inserted into the annular grooves (35, 37, 40, 41) as a coupling element.

2. Disc brake as claimed in claim 1,
**characterized** in that the coupling element (13) is integrally designed with the nut (12).

3. Disc brake as claimed in claim 1,
**characterized** in that the metal ring (38) is bent from a piece of wire.

4. Disc brake as claimed in claim 1,
**characterized** in that the metal ring (39) has a rectangular cross-sectional shape.

5. Disc brake as claimed in any one of the preceding claims,
**characterized** in that the snap-in connection is disengageable.

6. Disc brake as claimed in claim 1,
**characterized** in that at least one annular groove has a ramp-like chamfered groove wall.

7. Disc brake as claimed in any one of claims 1 to 6,
**characterized** in that the nut (12) has a generally radial venting duct (43).

8. Disc brake as claimed in any one of claims 1 to 6,
**characterized** in that the auxiliary piston (32) has at least one venting groove (44) which extends from an enclosed hollow chamber (45) to run radially along an annular piston end surface (46) and, thereafter, runs in a paraxial direction on the external peripheral surface (47) of the auxiliary piston (32) until an area which is not covered by the nut (12).

## Revendications

1. Frein à disque à dispositif automatique de rattrapage de jeu ; comportant un dispositif d'actionnement hydraulique, qui comprend un piston de frein (4) disposé à coulissement dans un cylindre de frein (3); comportant un dispositif d'actionnement mécanique (8) qui comprend, pour la transmission d'une force d'actionnement en parallélisme axial sur le piston de frein (4), une broche (11) bloquée en rotation et axialement coulissante, et un écrou (12) pouvant être vissé sur la broche (11); comportant un élément d'accouplement (13), qui est lié en rotation à l'écrou (12) et comprend une surface de friction conique (14) qui, lors de l'actionnement mécanique du disque de frein, peut être pressée contre une surface de friction (15), formée sur le piston de frein (4), pour empêcher une rotation de l'écrou (12) ; comportant un moyen (23) pour retenir en élasticité axiale l'élément d'accouplement (13) lors de l'actionnement hydraulique du disque de frein, de sorte que le piston de frein (4) déplacé axialement se dégage de l'élément d'accouplement (13) et que l'écrou (12) peut tourner sur la broche (11), afin d'effectuer le rattrapage de jeu, tant que la pression hydraulique ne dépasse pas une valeur prédéfinie ; comportant un piston auxiliaire (32), disposé à coulissement dans un perçage axial (31) du piston de frein (4) et relié à l'écrou (12), et qui est exposé sur un côté axial à la pression hydraulique et sur l'autre côté à la pression atmosphérique, de sorte qu'en présence d'une pression hydraulique qui dépasse la valeur déterminée par la force de retenue élastique, l'élément d'accouplement (13) est à nouveau pressé par sa surface de friction (14) contre la surface de friction (15) du piston de frein (4), le piston auxiliaire (32) et l'élément d'accouplement (13) étant formés sur deux pièces séparées (32, 12) et le piston auxiliaire (32) étant relié à l'écrou (12) par une liaison à enclenchement (35, 37, 38, 39, 40, 41) à engagement axial, **caractérisé** en ce que le piston auxiliaire (32) est reçu dans un perçage (36) de l'écrou (12) et comprend une rainure annulaire (35, 41) extérieurement entourante qui est alignée avec une rainure annulaire (37, 40) intérieurement entourante du perçage (36) de l'écrou (12), et en ce qu'un anneau métallique ouvert (38. 39) est disposé comme élément de liaison dans les rainures annulaires (35, 37, 40, 41).

2. Frein à disque selon la revendication 1, **caractérisé** en ce que l'élément d'accouplement (13) est réalisé d'un seul tenant avec l'écrou (12).

3. Frein à disque selon la revendication 1, **caractérisé** en ce que l'anneau métallique (38) est courbé à partir d'un morceau de fil métallique.

4. Frein à disque selon la revendication 1, **caractérisé** en ce que l'anneau métallique (39) est réalisé de section rectangulaire.

5. Frein à disque selon l'une quelconque des revendications précédentes, **caractérisé** en ce que la liaison à enclenchement peut être désengagée.

6. Frein à disque selon la revendication 1, **caractérisé** en ce qu'au moins une rainure annulaire comprend une paroi de rainure chanfreinée à la manière d'une rampe.

7. Frein à disque selon l'une quelconque des revendications 1 à 6, **caractérisé** en ce que l'écrou (12) comprend un canal d'évacuation d'air (43) essentiellement radial.

8. Frein à disque selon l'une quelconque des revendications 1 à 6, **caractérisé** en ce que le piston auxiliaire (32) comprend au moins une rainure d'évacuation d'air (44) qui, en partant d'une cavité incluse (45), s'étend d'abord radialement le long d'une face frontale annulaire de piston (46) puis parallèlement à l'axe sur la face d'enveloppe extérieure (47) du piston auxiliaire (32), et atteint une région qui n'est pas recouverte par l'écrou (12).
